# EUROPEAN PATENT APPLICATION

(11) **EP 2 139 154 A1**
(43) Date of publication of application: **30.12.2009**
(21) Application number: 08783719.1
(22) Date of filing: 23.07.2008
(51) Int. Cl.: H04L 12/00

(54) **IMPLEMENTATION METHOD, SYSTEM, MEDIA GATEWAY AND MEDIA GATEWAY CONTROLLER FOR ROUTE CONTROL**

(30) Priority: 09.08.2007 CN 200710140505
(71) Applicant: Huawei Technologies Co., Ltd., Longgang District Shenzhen 518129 (CN)
(72) Inventor: LIAO, Zhijun, Guangdong 518129 (CN); ZHU, Haopeng, Guangdong 518129 (CN)
(74) Representative: Aufhauser, Christoph
(86) International application number: PCT/CN2008/071724
(87) International publication number: WO 2009/018744

(57) **Abstract**

A method, a system, an MGW and an MGC for implementing route control are disclosed. The method for implementing route control includes: detecting an IP bearer of a link connecting an MGW with a peer end to obtain a detection result; and performing call route control according to the result of the detection of the IP bearer.

## Description

### FIELD OF THE TECHNOLOGY

The present invention relates to the field of telecommunication technology, and more particularly to a method, a system, a media gateway (MGW), and a media gateway controller (MGC) for implementing route control.

### BACKGROUND OF THE INVENTION

Currently, telecommunication services and technologies are developing continuously. Service provision and control in a conventional public switched telephone network (PSTN) based on time division multiplexing (TDM) transmission are completed by switches. Although this technology ensures high speech quality, a long period is required for providing a new service. Meanwhile, with the development of network technologies and the increase in computer interconnection requirements, a packet switched data network (PSDN) based on the Internet Protocol (IP)/Asynchronous Transfer Mode (ATM) expands gradually. The packet switched network is suitable for transmission of various types of information, and has a high network resource utilization and low operation and maintenance costs. Therefore, a voice over IP (VoIP) technology emerges to exchange voice signals over an IP network as packets.

In this case, Next Generation Network (NGN) emerges accordingly, thereby realizing the transition from the conventional circuit-switched PSTN to a packet-switched IP network. The NGN bears all the services of the existing PSTN, unloads a large amount of data transmission onto the IP network so as to reduce the load of the PSTN, provides many new services and enhances many old services based on the new characteristics of the IP technology. In view of this, the NGN is developed by integrating the TDM-based PSTN speech network with the IP/ATM-based packet-switched network, thereby making it possible to implement integrated services, such as voice, video, and data services, in the new generation network.

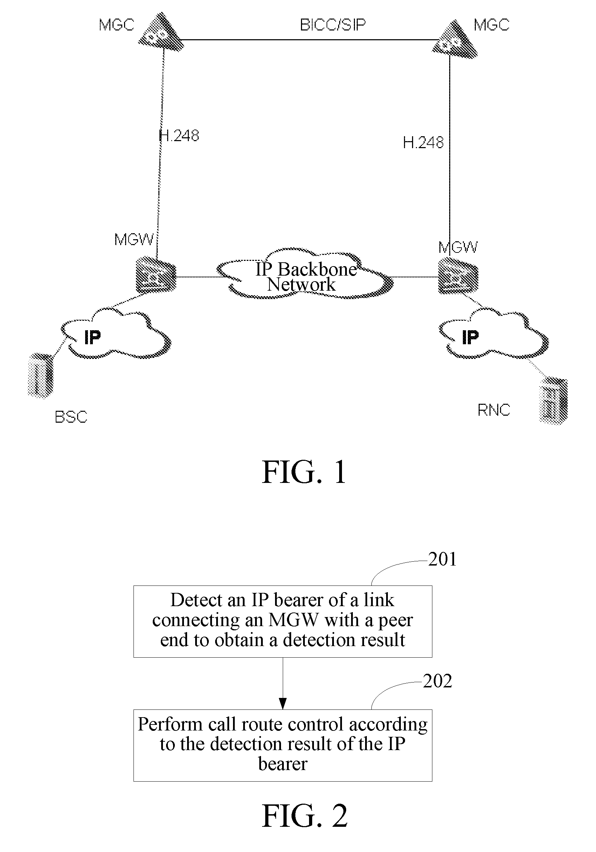

In the NGN architecture, separate structures are introduced, that is, an MGC and an MGW FIG. 1 is a networking diagram of the NGN architecture. MGCs are core network elements, and constitute a network domain together with MGWs attached thereto. As a software-based distributed switching/control platform, the MGC is a network device oriented to the service control layer, which is located at the center of the domain, controls other related network modules, and performs call control. The MGW implements user access in various modes, is controlled by the MGC, executes commands in a process, and generally performs end-to-end service connection, that is, a bearer function. The MGC controls the MGW through a standard H.248/MGCP (Media Gateway Control Protocol) interface, and achieves the separation of service control from call control. An end-to-end call process includes a signaling exchange process and a traffic exchange process. The signaling exchange process is completed by an MGC in a local network domain and an MGC in a peer network domain, in which the MGCs communicate with each other based on the Bearer Independent Call Control (BICC) Protocol/Session Initiation Protocol (SIP). The traffic exchange process is completed by an MGW controlled by the MGC in the local network domain and an MGW controlled by the MGC in the peer network domain. Moreover, in a mobile network, IP bearer connection may also be adopted between a radio network controller/base station controller (RNC/BSC) and a core network device (an MGC or an MGW). In a mobile phone network, the MGC may be a mobile switching center-server (MSC-SERVER). An MSC has functions similar to those of a switching device in a fixed telephone network, and mainly functions to perform communication control and management on mobile subscribers within a control area thereof, provide interfaces for connecting MSCs and base stations (BSs) in other areas, and perform call connection and information exchange for the mobile subscribers.

In the NGN architecture, both a TDM bearer and an IP bearer may be used, and the two are mutually redundant. When the IP bearer is used, if an MGC fails from an MGW, or no circuit resources are available on the MGC, the MGC may trigger rerouting for a new call to select a route with available resources (a TDM backup route or other available IP routes), so as to ensure successful call connection. However, during the implementation of the present invention, the inventors found that, the technology can only distribute the traffic to back up routes when an H.248 link between an MGW and an MGC, a link between MGCs, or a link between an MGC and an RNC/BSC is interrupted, but cannot detect whether an interruption or failure occurs in an IP bearer between MGWs in different network domains or between an RNC/BSC and an MGW, and cannot implement route switching in this case. At this time, if a congestion or failure occurs in an IP bearer between MGWs or between an RNC/BSC and an MGW, services become unavailable, thereby reducing the performance of network services.

### SUMMARY OF THE INVENTION

Accordingly, the present invention is directed to a method for implementing route control, a system for implementing route control, an MGW and an MGC, so as to improve the performance of call services.

In an embodiment, the present invention provides a method for implementing route control. The method is as follows.

An IP bearer of a link connecting an MGW with a peer end is detected. Call route control is performed according to a detection result.

In another embodiment, the present invention provides a system for implementing route control, which includes a detection module and a route control processing module.

The detection module is adapted to detect an IP bearer of a link connecting an MGW with a peer end.

The route control processing module is adapted to perform call route control according to a detection result obtained by the detection module.

In still another embodiment, the present invention provides an MGW, which includes a detection module and a detection information reporting module.

The detection module is adapted to detect an IP bearer of a link connecting the MGW with a peer end.

The detection information reporting module is adapted to report detection information to an MGC according to a detection result of the detection module.

In yet another embodiment, the present invention provides an MGC, which includes a route control execution module.

The route control execution module is adapted to acquire a detection result of an IP bearer, and perform call route control according to the detection result of the IP bearer.

It can be seen from the above solutions that, in the present invention, the IP bearer of the link connected to the MGW is detected, and call route control is performed according to the detection result. In this way, when a failure or congestion occurs in the IP bearer of the link connected to the MGW, a route can be connected in time, thereby improving the performance of network services.

### BRIEF DESCRIPTION OF THE DRAWINGS

FIG. 1 is a networking diagram of the NGN architecture in the prior art;
FIG. 2 is an exemplary flow chart of a method for implementing route control according to an embodiment of the present invention;
FIGs. 3(a)-3(e) are networking diagrams of several specific implementations of the method shown in FIG. 2;
FIG. 4 is an exemplary flow diagram of a system for implementing route control according to an embodiment of the present invention;
FIG. 5 is a structural view of a first specific implementation of the system shown in FIG. 4;
FIG. 6 is a structural view of a second specific implementation of the system shown in FIG. 4;
FIG. 7 is a structural view of a third specific implementation of the system shown in FIG. 4;
FIG. 8 is a structural view of a fourth specific implementation of the system shown in FIG. 4; and
FIG. 9 is an internal structural view of an MGW according to an embodiment of the present invention.

### DETAILED DESCRIPTION OF THE EMBODIMENTS

In the present invention, an IP bearer of a link connected to an MGW is detected, and call route control is performed according to a detection result. For the convenience of description, a remote MGW or a local RNC/BSC communicating with the current MGW is collectively referred to as a peer end herein.

In order to make the objectives, technical solutions, and advantages of the present invention more comprehensible, the present invention is further described in detail below with reference to embodiments and the accompanying drawings.

FIG. 2 is an exemplary flow chart of a method for implementing route control according to an embodiment of the present invention. Referring to FIG. 2, the method includes the following steps.

In step 201, an IP bearer of a link connecting an MGW with a peer end is detected to obtain a detection result.

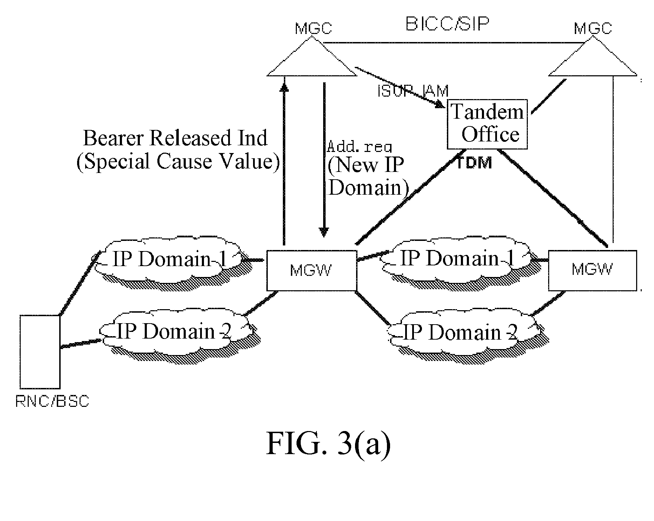

In this step, when the IP bearer of the link connecting the MGW with the peer end is detected, the detection is mainly directed to the Quality of Service (QoS) of the IP bearer and whether the IP link is connected or disconnected. A variety of detection methods, for example, at least the following five methods, may be used. FIGs. 3(a)-3(e) are networking diagrams of specific implementations of the five methods, in which a local end and a remote end may communicate with each other through a tandem office based on TDM transmission, and it is assumed that two IP domains exist between a local MGW and a remote MGW, that is, an IP domain 1 and an IP domain 2, and two IP domains exist between the local MGW and a local RNC/BSC, that is, an IP domain 1 and an IP domain 2.

In a first method, the local MGW detects an IP bearer of a peer IP address or network segment. Referring to FIG. 3(a), in this method, when the local MGW establishes a call connection with the peer end, the local MGW may obtain a destination IP address of the peer end that the current call reaches, so that IP bearer links between the local MGW and different IP addresses or network segments of the peer end may be detected.

The detection of an IP bearer link of each peer IP address or network segment at least may include the following two modes.

In a first mode, the local MGW detects the QoS of the IP link by collecting statistics for a packet loss ratio between the local MGW and the current IP address of the peer end, or the packet loss ratio, a time delay and a jitter between the local MGW and the current IP address of the peer end within a period of time.

In a specific implementation, if a plurality of calls is originated to the peer IP address/network segment, in order to reduce the computation, it is unnecessary to collect statistics for packet loss ratios, or packet loss ratios, time delays and jitters of all calls; instead, it only needs to randomly select several calls and collect statistics for the calls, for example, randomly select a few (for example, three) calls. As for the statistical method, statistics for packet loss ratios, or packet loss ratios, time delays and jitters on channels of the sample calls may be collected through real-time monitoring. Here, the statistics may be directly collected by using the Real-time Transport Control Protocol (RTCP). The method is applicable to an IP bearer between MGWs and an IP bearer between an MGW and an RNC/BSC.

In a second mode, the QoS of the IP link is detected by collecting statistics for a call failure rate caused by the current IP address unreachable within a period of time.

In a specific implementation, if a Nb interface user plane (NbUP) negotiation process is initiated before a bearer plane is established, a call failure rate (that is, a call loss rate) caused by the current IP address of the peer end unreachable is obtained by collecting statistics for the number of timeout failures of the NbUP negotiation within a period of time, thereby detecting the QoS of the IP link.

Alternatively, in the existing mechanism, a continuity check mechanism in an IP bearer network may be added. That is, in the call establishment process, after MGCs complete a session description protocol (SDP) negotiation, the MGW sends a handshake message to the IP address of the peer end, and starts a timer. If the MGW receives no acknowledgement message when the timer times out, the MGW resends the handshake message. If no response is received after the handshake message has been resent for certain times, it is considered that the IP address of the peer end is unreachable.

In the two modes, in order to identify the QoS result, a packet loss ratio threshold (for example, 5%), or packet loss ratio, time delay and jitter thresholds, or a call loss rate threshold (for example, 30%) may be preset. It is detected whether a congestion or failure occurs in the IP bearer according to the packet loss ratio and the preset packet loss ratio threshold, or according to the packet loss ratio, jitter, and time delay values and the preset packet loss ratio, jitter, and time delay thresholds, or according to the call loss rate and the preset call loss rate threshold. When it is detected that the packet loss ratio, or the packet loss ratio, jitter, and time delay values, or the call loss rate reaches the preset thresholds, it is determined that a congestion or failure occurs in the IP bearer.

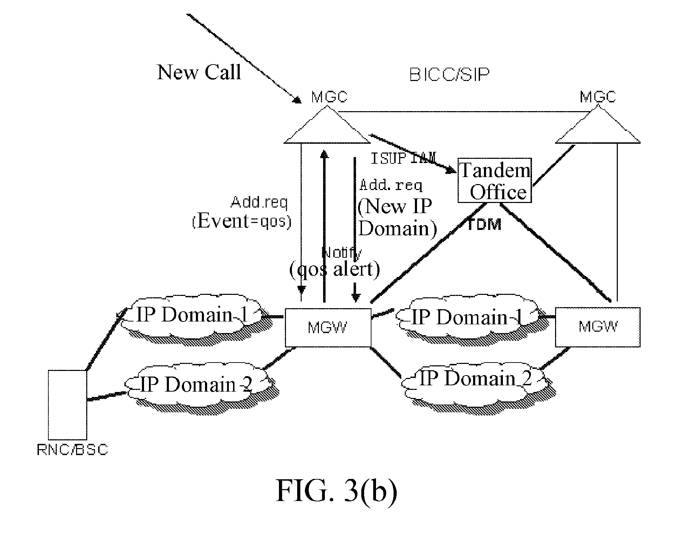

In a second method, an MGC indicates a peer call on which the IP bearer detection is to be performed to the MGW, and the MGW detects an IP bearer of the indicated call, that is, performs the IP bearer detection notified by the MGC. Referring to FIG. 3(b), in this method, the MGW does not need to actively collect statistics for the destination IP address; instead, when the call is established, the MGC instructs the MGW to detect the QoS of IP bearers of some peer calls on which the IP bearer detection is to be performed through an H.248 ADD command.

The peer calls on which the IP bearer detection is to be performed include: calls from the MGW for performing the IP bearer detection to all MGWs controlled by a remote MGC, or calls between an MGW pair constituted by the MGW and a remote MGW, or calls from the MGW to a local RNC/BSC when the MGW and the access side use IP bearers.

The MGW for this call indicated by the remote MGC may be or not be notified to a local MGC, so that when the local MGC does not know the peer MGW responsible for the call bearer, the local MGC may randomly select several calls on the peer MGC as sample calls, and instruct the MGW to collect statistics; and when the local MGC knows the peer MGW responsible for the call bearer, the local MGC may randomly select several calls on the peer MGW as sample calls, that is, randomly select several calls between the MGW pair constituted by the current local MGW and the current peer MGW as sample calls. Moreover, the local MGC may also randomly select several calls on the local RNC/BSC as the sample calls.

According to the received ADD command, the MGW collects statistics for a packet loss ratio, or packet loss ratio, jitter and time delay values of an IP bearer corresponding to the related call link, and determines whether a congestion or failure occurs in the IP bearer according to the packet loss ratio, or the packet loss ratio, jitter and time delay values, and preset thresholds. When the packet loss ratio and/or the jitter and time delay values are greater than the preset thresholds, it is determined that a congestion or failure occurs in the IP bearer.

In a third method, an MGC detects the IP bearer by collecting statistics for a call completion rate of the local and peer ends.

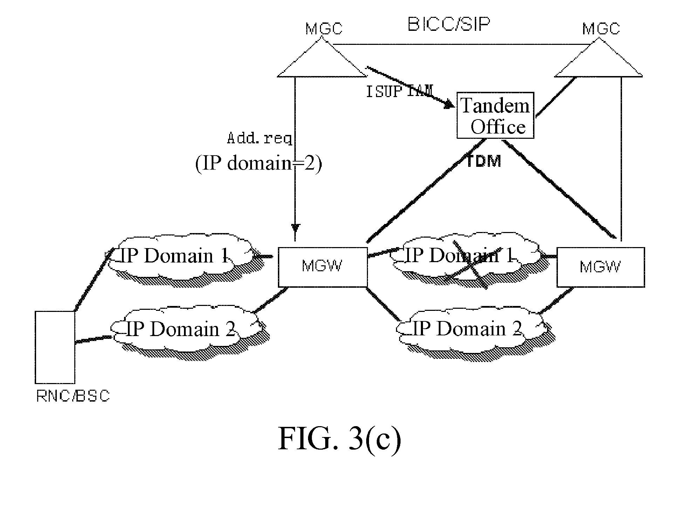

Referring to FIG. 3(c), no MGW is involved in this method. The MGC collects statistics for a call completion rate of calls to the peer end (including a remote MGC and an RNC/BSC) within the latest period, and determines whether a congestion or failure occurs in the IP bearer according to the call completion rate and a preset call completion rate threshold. When the call completion rate decreases to the preset call completion rate threshold, it is determined that a congestion or failure occurs in the IP bearer in this direction. Alternatively, a call loss rate is obtained according to a statistical result of the call completion rate, and it is detected whether a congestion or failure occurs in the IP bearer according to the call loss rate and a preset call loss rate threshold. When the call loss rate exceeds the preset call loss rate threshold, it is determined that a congestion or failure occurs in the IP bearer in this direction.

In a fourth method, the MGW directly determines whether a congestion or failure occurs in the IP bearer according to a status of a local IP port.

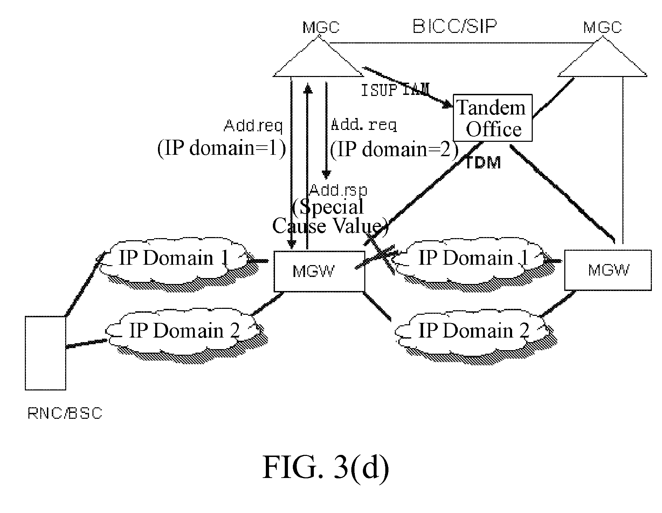

Referring to FIG. 3(d), in this method, the failure of a physical IP port or an interruption in a line connection can be immediately detected by MGW.

In a fifth method, in the call process, it is detected whether a congestion or failure occurs in the IP bearer according to a result of a user-plane negotiation process.

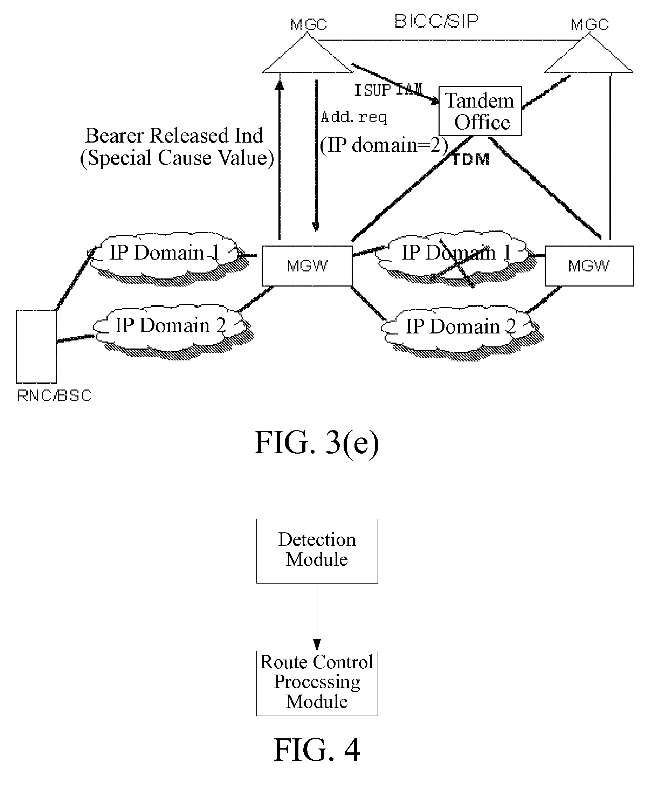

Referring to FIG. 3(e), the bearer plane is established after an NbUP negotiation process is completed. Therefore, when the NbUP negotiation fails, it is generally considered that a failure occurs on the bearer plane.

Alternatively, in the existing mechanism, a continuity check mechanism in an IP bearer network may be added. That is, in the call establishment process, after MGCs complete an SDP negotiation, the MGW sends a handshake message to the IP address of the peer end, and starts a timer. If the MGW receives no acknowledgement message when the timer times out, the MGW resends the handshake message. If no response is received after the handshake message has been resent for certain times, it is considered that the IP bearer fails.

In step 202, call route control is performed according to the detection result of the IP bearer.

For the two modes of the first method in step 201, referring to FIG. 3(a), when it is detected that a congestion or failure occurs in the IP bearer, the MGW actively reports a bearer released indication (bearer released ind) message to the MGC in response to subsequent calls originated to the IP address or network segment in a proportion according to a value of the packet loss ratio, or according to values of the packet loss ratio, the time delay and the jitter, or according to a value of the call loss rate, and carries a cause identifier (ID) (for example, a cause value 83) indicating that the IP link fails. The higher the packet loss ratio or the call loss rate is, the higher the proportion of calls actively released by the MGW will be. However, the MGW still needs to maintain a small amount of calls for detecting the recovery of the bearer channel.

When the MGC receives the bearer released ind message reported by the MGW in the call establishment process, and the bearer released ind message carries the cause ID (for example, the cause value 83) indicating that the IP link fails, the MGC performs rerouting or IP domain handover (that is, IP domain reselection) to route the current call to a backup route or other available IP routes or the IP bearer plane, for example, a new IP domain indicated by an ADD.req message.

For the second method in step 201, referring to FIG. 3(b), when it is detected that a congestion or failure occurs in the IP bearer, the MGW reports a notify message carrying a QoS level to the MGC. At this time, an event type in the notify message may be a quality alert event defined in the Network Package H.248.1E.11. If the congestion or failure detected by the MGW reaches the highest level, it is considered that the IP bearer network is interrupted, and an event type in the notify message may be a network failure event defined in the Network Package.

When the MGC receives the notify message indicating the QoS level of the IP bearer link between the local MGW and the peer end through an H.248 interface, the MGC reduces the number of calls from the local MGW to the corresponding IP bearer link according to the QoS level in the notify message, and routes the calls to other available routes, or distributes the calls to the peer end through other MGWs at the local end, that is, selects other MGWs for traffic exchange. That is, the MGC controls a part or all of calls to the peer end to perform rerouting according to the QoS level. Alternatively, when a plurality of IP domains exist between the local and peer ends, the MGC performs IP domain handover on a part of the calls, and instructs the MGW to allocate IP resources of a corresponding domain through the ADD.req message carrying a new IP domain.

For the third method in step 201, referring to FIG. 3(c), when it is detected that a congestion or failure occurs in the IP bearer, for example, it is detected that a failure occurs in the IP domain 1, an alarm message is sent, and inter-route traffic distribution or inter-route traffic handover is automatically performed to gradually distribute the traffic in the direction of failure to a backup route. IP domain handover may also be performed to distribute the traffic to other IP domains (for example, the IP domain 2). If the call completion rate is 0, the MGC automatically hands over all the traffic to the backup route or other IP domains.

For the fourth method in step 201, referring to FIG. 3(d), when it is detected that a congestion or failure occurs in the IP bearer, for example, it is detected that a failure occurs at an interface between the MGW and the IP domain 1, if the MGC originates a call and requires the MGW to allocate IP resources on the port, the MGW returns a response message (ADD.rsp) carrying a special cause value indicating that the bearer is interrupted. Here, the MGC uses an ADD command to originate the call and require the MGW to allocate the IP resources on the port, and the response message returned by the MGW is an ADD.rsp message.

When the MGC uses the ADD command to add an endpoint, and the MGW returns the response message indicating that the bearer is interrupted, the MGC performs failed route rerouting or IP domain handover according to a failure cause value indicating that the bearer is interrupted, so as to route the call to a backup route or hand over the call to other reachable IP routes, for example, may indicate the IP domain 2 through an ADD.req message.

For the fifth method in step 201, referring to FIG. 3(e), the local MGW initiating the negotiation process (for example, the NbUP negotiation) reports a bearer released ind message indicating that the negotiation process fails to the MGC when determining that the negotiation process exceeds a predetermined period of time, for example, the negotiation process of the IP domain 1 exceeds a predetermined period of time, in which the indication message carries a special cause value.

When receiving the bearer released ind message indicating that the negotiation process fails from the MGW, the MGC firstly ends the current bearer establishment process, and then performs rerouting or IP domain handover (for example, may indicate the IP domain 2 through an ADD.req message). Here, a roaming number needs to be reacquired before the rerouting.

In the above five methods, when a failure or congestion occurs, an alarm message may be further sent.

Further, after the IP bearer is recovered from the failure, services on the interface can be restored.

For the first method in step 201, when the first mode is used and the packet loss ratio between the MGW and the peer IP address detected by the MGW is lower than the preset packet loss ratio threshold, or when the second mode is used and the number of calls with failed NbUP negotiation within a period of time is smaller than the preset call loss rate threshold, the MGW determines that the IP bearer is recovered to a normal state from the congestion or failure, and then gradually and smoothly reduces the proportion of calls actively released, or directly restores the original communication and no longer actively releases any call.

For the second method in step 201, the MGW detects packet loss ratio information on the call channels in real-time according to an indication of the MGC, and reports a notify message carrying QoS recovery information to the MGC if the bearer plane is recovered from the failure or congestion or the packet loss ratio is lower than the preset threshold. At this time, an event type in the notify message may be a quality alert ceasing event. The MGC gradually restores the call traffic in the direction of the corresponding MGC or between a corresponding MGW pair according to the notify message.

For the third method in step 201, maintenance personnel may handle the failure according to the alarm message, and restore the original proportion of traffic load distribution.

For the fourth method in step 201, when the IP port of the MGW is recovered to a normal state and the line connection is recovered to a normal state, the MGW returns a response message indicating a success when receiving a call originated from the MGC requiring the MGW to allocate IP resources on the IP port, and automatically restores the call to the original route direction, that is, connects the call in the original route direction as in the normal condition.

For the fifth method in step 201, if the bearer between the MGWs is recovered, the negotiation process such as the NbUP negotiation is successful, and the call is connected normally.

A method for performing rerouting includes: selecting a TDM backup route or other available IP routes. A method for performing IP domain handover includes: delivering, by the MGC, different domain parameters through an ADD.req command, instructing the MGW to use other available IP bearer planes and allocate corresponding IP resources. The method of the present invention is directed to statistical handover or distribution of a plurality of calls. Here, the handover or distribution refers to performing rerouting or IP domain handover on a portion or all of calls.

In the method for implementing route control according to this embodiment of the present invention, the IP bearer of the link connected to the MGW is detected, and call route control is performed according to the detection result. In this way, when a failure or congestion occurs in the IP bearer of the link connected to the MGW, a route can be connected in time, thereby improving the performance of network services.

FIG. 4 is an exemplary structural view of a system for implementing route control according to an embodiment of the present invention. Referring to FIG. 4, the system includes a detection module and a route control processing module.

The detection module is adapted to detect an IP bearer of a link connecting an MGW with a peer end.

The route control processing module is adapted to perform call route control according to a detection result obtained by the detection module.

In specific implementations, the system may be implemented in various forms. Five specific implementations are provided in the following.

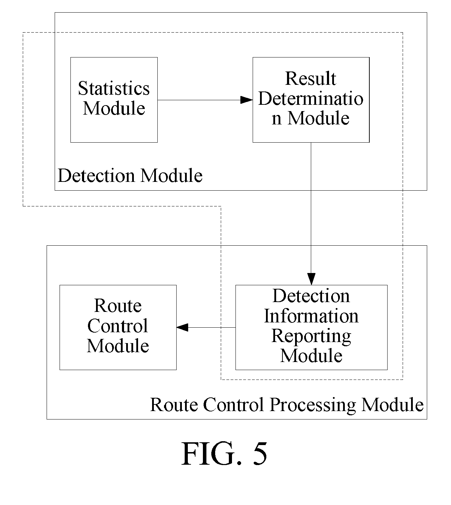

FIG. 5 is a structural view of a first specific implementation. Referring to FIG. 5, in the system, the detection module includes a statistics module and a result determination module, and the route control processing module includes a detection information reporting module and a route control module.

The statistics module is adapted to collect statistics for a packet loss ratio with a peer IP address, or for the packet loss ratio, a jitter and a time delay with a peer IP address, or for a call loss rate.

The result determination module is adapted to determine whether a congestion or failure occurs in the IP bearer according to the packet loss ratio, or the packet loss ratio, the jitter and the time delay, or the call loss rate obtained by the statistics module as well as corresponding preset thresholds.

The detection information reporting module is adapted to send a bearer released ind message carrying a cause ID indicating that the IP link fails to the route control module for subsequent calls originated to the IP address in a proportion according to a congestion or failure level when the detection result is that a congestion or failure occurs.

The route control module is adapted to perform rerouting or IP domain handover on the calls corresponding to the bearer released ind message carrying the cause ID indicating that the IP link fails according to the message.

In the system, as shown by a dashed-line portion in FIG. 5, the statistics module, the result determination module, and the detection information reporting module are disposed in the MGW, and the route control module is disposed in an MGC. At this time, corresponding to the solution using the first method described in the process shown in FIG. 2, specific operational processes of the modules are the same as the operational processes of the first method described in the process shown in FIG. 2.

Further, the detection information reporting module also has the following function. When detecting that the IP bearer is recovered from the congestion or failure, the detection information reporting module reduces the proportion in which the bearer released ind message carrying the cause ID indicating that the IP link fails is sent to the route control module for subsequent calls originated to the IP address according to a recovery level.

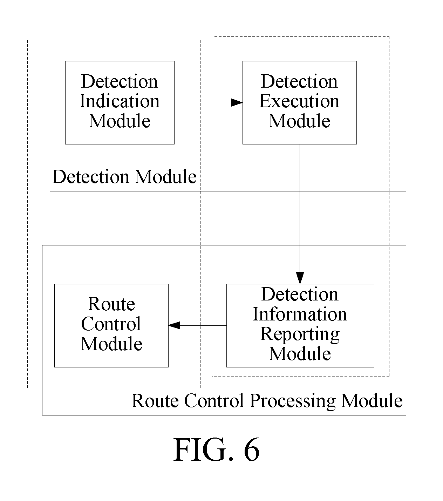

FIG. 6 is a structural view of a second specific implementation. Referring to FIG. 6, in the system, the detection module includes a detection indication module and a detection execution module, and the route control processing module includes a detection information reporting module and a route control module.

The detection indication module is adapted to send a call indication of detecting the IP bearer to the detection execution module.

The detection execution module is adapted to collect statistics for a packet loss ratio of the IP bearer, or for the packet loss ratio, a jitter and a time delay of the IP bearer, and detect whether a congestion or failure occurs in the IP bearer according to the packet loss ratio or the packet loss ratio, jitter and time delay values as well as preset thresholds.

The detection information reporting module is adapted to send a notify message carrying a QoS level to the route control module when the detection result is that a congestion or failure occurs.

The route control module is adapted to control a portion or all of calls to the peer end and perform rerouting or IP domain handover according to the QoS level in the notify message.

In the system, as shown by a dashed-line portion in FIG. 6, the detection indication module and the route control module are disposed in an MGC, and the detection execution module and the detection information reporting module are disposed in the MGW. At this time, corresponding to the solution using the second method described in the process shown in FIG. 2, specific operational processes of the modules are the same as the operational processes of the second method described in the process shown in FIG. 2.

Further, the detection information reporting module is further adapted to send a notify message carrying QoS recovery information to the route control module when detecting that the IP bearer is recovered to a normal state from the congestion or failure, and the route control module is further adapted to restore original route control when receiving the notify message carrying the QoS recovery information.

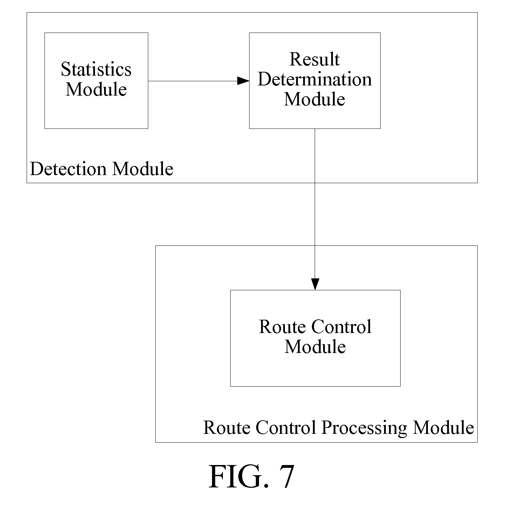

FIG. 7 is a structural view of a third specific implementation. Referring to FIG. 7, in the system, the detection module includes a statistics module and a result determination module, and the route control processing module includes a route control module.

The statistics module is adapted to collect statistics for a call completion rate or a call loss rate of the IP bearer with the peer end.

The result determination module is adapted to determine whether a congestion or failure occurs in the IP bearer according to the call completion rate or the call loss rate obtained by the statistics module as well as a preset call completion rate threshold or a preset call loss rate threshold.

The route control module is adapted to send an alarm message when the detection result is that a congestion or failure occurs, and perform inter-route traffic distribution, inter-route traffic handover, or IP domain handover.

In the system, the statistics module, the result determination module, and the route control module are all disposed in an MGC. At this time, corresponding to the solution using the third method described in the process shown in FIG. 2, specific operational processes of the modules are the same as the operational processes of the third method described in the process shown in FIG. 2.

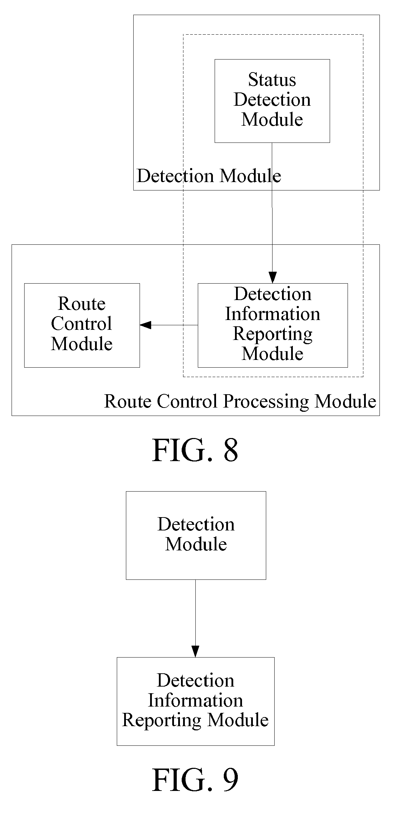

FIG. 8 is a structural view of a fourth specific implementation of the system shown in FIG. 4. Referring to FIG. 8, in the system, the detection module includes a status detection module, and the route control processing module includes a detection information reporting module and a route control module.

The status detection module is adapted to determine whether a congestion or failure occurs in the IP bearer according to a status of an IP port.

The detection information reporting module is adapted to report a response message indicating that the bearer is interrupted to the route control module after receiving a call originated from an MGC requiring the MGW to allocate IP resources on the IP port when the detection result is that a congestion or failure occurs.

The route control module is adapted to perform rerouting or IP domain handover according to the response message indicating that the bearer is interrupted.

In the system, the detection module and the detection information reporting module are disposed in the MGW, and the route control module is disposed in the MGC. At this time, corresponding to the solution using the fourth method described in the process shown in FIG. 2, specific operational processes of the modules are the same as the operational processes of the fourth method described in the process shown in FIG. 2.

A structural view of a fifth specific implementation is the same as that shown in FIG. 8. In the system, the detection module includes a status detection module, and the route control processing module includes a detection information reporting module and a route control module.

The status detection module is adapted to determine whether a congestion or failure occurs in the IP bearer according to a result of a user-plane negotiation process.

The detection information reporting module is adapted to report a bearer released ind message indicating that the negotiation process fails to the route control module when determining that the negotiation process exceeds a predetermined period of time.

The route control module is adapted to end a current bearer establishment process according to the bearer released indication message, and perform rerouting or IP domain handover. Here, a roaming number may be reacquired before the rerouting.

In the system, the detection module and the detection information reporting module may be disposed in the MGW, and the route control module is disposed in an MGC. At this time, corresponding to the solution using the fifth method described in the process shown in FIG. 2, specific operational processes of the modules are the same as the operational processes of the fifth method described in the process shown in FIG. 2.

Through the above detailed description of the system for implementing route control, it can be seen that, the internal structure of an MGW according to an embodiment of the present invention includes a detection module and a detection information reporting module, as shown in FIG. 9.

The detection module is adapted to detect an IP bearer of a link connecting the MGW with a peer end.

The detection information reporting module is adapted to report detection information to an MGC according to a detection result of the detection module.

In specific implementations, the detection module and the detection information reporting module may be implemented in various forms.

For example, the detection module may include a statistics module and a result determination module.

The statistics module is adapted to collect statistics for a packet loss ratio with a peer IP address, or for the packet loss ratio, a jitter and a time delay with the peer IP address, or for a call loss rate.

The result determination module is adapted to determine whether a congestion or failure occurs in the IP bearer according to the packet loss ratio, or the packet loss ratio, the jitter and the time delay, or the call loss rate obtained by the statistics module as well as corresponding preset thresholds.

At this time, when a detection result of the IP bearer of an IP address is that a congestion or failure occurs, the detection information reporting module sends a bearer released ind message carrying a cause ID indicating that the IP link fails to the route control module for subsequent calls originated to the IP address in a proportion according to a congestion or failure level. The detection information reporting module specifically includes an information generating module and an information reporting module.

The information generating module is adapted to generate a bearer released ind message carrying a cause ID indicating that the IP link fails for subsequent calls originated to the IP address in a proportion according to a congestion or failure level when the detection result is that a congestion or failure occurs.

The information reporting module is adapted to report the bearer released ind message carrying the cause ID indicating that the IP link fails.

At this time, corresponding to the solution using the first method described in the process shown in FIG. 2, specific operational processes of the modules are the same as the operational processes of the first method described in the process shown in FIG. 2.

For another example, the detection module may include a detection execution module, adapted to collect statistics for a packet loss ratio of an IP bearer of a call indicated by an MGC, or for the packet loss ratio, a jitter and a time delay of the IP bearer of the call indicated by the MGC, and detect whether a congestion or failure occurs in the IP bearer according to the packet loss ratio, jitter and time delay values as well as preset thresholds.

At this time, when the detection result is that a congestion or failure occurs, the detection information reporting module sends a notify message carrying a QoS level to the route control module. In a specific implementation, the detection information reporting module includes an information generating module and an information reporting module.

The information generating module is adapted to generate a notify message carrying a QoS level when the detection result is that a congestion or failure occurs.

The information reporting module is adapted to report the notify message carrying the QoS level.

At this time, corresponding to the solution using the second method described in the process shown in FIG. 2, specific operational processes of the modules are similar to the operational processes of the second method described in the process shown in FIG. 2.

For yet another example, the detection module may include a status detection module, adapted to determine whether a congestion or failure occurs in the IP bearer according to a status of an IP port.

At this time, when the detection result is that a congestion or failure occurs, the detection information reporting module reports a response message indicating that the bearer is interrupted to the route control module after receiving a call originated from an MGC requiring the MGW to allocate IP resources on the IP port. In a specific implementation, the detection information reporting module may include an information generating module and an information reporting module.

The information generating module is adapted to generate a response message indicating that the bearer is interrupted after receiving a call originated from an MGC requiring the MGW to allocate IP resources on the IP port when the detection result is that the congestion or failure occurs.

The information reporting module is adapted to report the response message indicating that the bearer is interrupted.

At this time, corresponding to the solution using the fourth method described in the process shown in FIG. 2, specific operational processes of the modules are the same as the operational processes of the fourth method described in the process shown in FIG. 2.

For still another example, the detection module may include a status detection module, adapted to determine whether a congestion or failure occurs in the IP bearer according to a result of a user-plane negotiation process.

At this time, the detection information reporting module reports a bearer released ind message indicating that the negotiation process fails to the route control module when determining that the negotiation process exceeds a predetermined period of time. In a specific implementation, the detection information reporting module may include an information generating module and an information reporting module.

The information generating module is adapted to generate a bearer released ind message indicating that the negotiation process fails when determining that the negotiation process exceeds a predetermined period of time.

The information reporting module is adapted to report the bearer released ind message indicating that the negotiation process fails.

At this time, corresponding to the solution using the fifth method described in the process shown in FIG. 2, specific operational processes of the modules are similar to the operational processes of the fifth method described in the process shown in FIG. 2.

Moreover, through the above detailed description of the system for implementing route control, it can also be seen that, an MGC according to an embodiment of the present invention includes a route control execution module, adapted to acquire a detection result of an IP bearer, and perform call route control according to the detection result of the IP bearer.

In specific implementations, corresponding to the solution using the first method described in the process shown in FIG. 2, the route control execution module includes an information receiving module and a route control module.

The information receiving module is adapted to receive a bearer released ind message carrying a cause ID indicating that the IP link fails.

The route control module is adapted to perform rerouting or IP domain handover on calls corresponding to the bearer released ind message carrying the cause ID indicating that the IP link fails received by the information receiving module according to the message.

Corresponding to the solution using the second method described in the process shown in FIG. 2, the route control execution module includes an information receiving module and a route control module.

The information receiving module is adapted to receive a notify message carrying a QoS level.

The route control module is adapted to control a portion or all of calls to the peer end and perform rerouting or IP domain handover according to the QoS level in the notify message received by the information receiving module.

Corresponding to the solution using the third method described in the process shown in FIG. 2, the MGC further includes a statistics module and a result determination module.

The statistics module is adapted to collect statistics for a call completion rate or a call loss rate of the IP bearer with the peer end.

The result determination module is adapted to determine whether a congestion or failure occurs in the IP bearer according to the call completion rate or the call loss rate obtained by the statistics module as well as a preset call completion rate threshold or a preset call loss rate threshold.

Moreover, the route control execution module includes a route control module, adapted to send an alarm message when a detection result determined by the result determination module is that a congestion or failure occurs, and perform inter-route traffic distribution, inter-route traffic handover, or IP domain handover.

Corresponding to the solution using the fourth method described in the process shown in FIG. 2, the route control execution module may include an information receiving module and a route control module.

The information receiving module is adapted to receive a response message indicating that the bearer is interrupted.

The route control module is adapted to perform rerouting or IP domain handover according to the response message indicating that the bearer is interrupted received by the information receiving module.

Corresponding to the solution using the fifth method described in the process shown in FIG. 2, the route control execution module includes an information receiving module and a route control module.

The information receiving module is adapted to receive a bearer released ind message indicating that the negotiation process fails.

The route control module is adapted to end a current bearer establishment process according to the received bearer released ind message indicating that the negotiation process fails received by the information receiving module, and perform rerouting or IP domain handover. Here, a roaming number may be reacquired before the rerouting.

In the system for implementing route control according to the embodiments of the present invention, the IP bearer of the link connected to the MGW is detected, and call route control is performed according to the detection result. In this way, when a failure or congestion occurs in the IP bearer of the link connected to the MGW, a route can be connected in time, thereby improving the performance of network services.

Persons of ordinary skill in the art should understand that all or a part of the steps in the method according to the embodiments of the present invention can be implemented by a program instructing relevant hardware, and the program may be stored in a computer readable storage medium, such as a ROM/RAM, a magnetic disk, or an optical disk.

Although the objectives, technical solutions, and advantages of the present invention are further described in detail through some embodiments, it should be understood that the above descriptions are merely exemplary embodiments of the present invention, but not intended to limit the protection scope of the present invention, and any modification, equivalent replacement, and improvement made without departing from the principle of the present invention shall fall within the protection scope of the present invention.

## Claims

1. A method for implementing route control, comprising:
detecting an Internet Protocol, IP, bearer of a link connecting a media gateway, MGW, with a peer end; and
performing call route control according to the result of the detection.

2. The method for implementing route control according to claim 1, wherein
the detecting the IP bearer of the link connecting the MGW with the peer end comprises:
detecting, by the MGW, an IP bearer between the MGW and a peer IP address or network segment; and
the performing the call route control according to the result of the detection comprises:
detecting, by the MGW, that a congestion or failure occurs in the IP bearer, and sending a message carrying a cause identifier, ID, indicating that the IP link fails, to an MGC for subsequent calls originated to the IP address or network segment in a proportion according to a congestion or failure level;
performing, by the MGC, rerouting, or IP domain handover on the calls corresponding to the message carrying the cause ID indicating that the IP link fails according to the message.

3. The method for implementing route control according to claim 2, further comprising: detecting, by the MGW, that the IP bearer is recovered from the congestion or failure, and reducing the proportion in which the message carrying the cause ID indicating that the IP link fails is sent to the MGC for the subsequent calls originated to the IP address according to a recovery level.

4. The method for implementing route control according to claim 2 or 3, wherein the detecting, by the MGW, the IP bearer between the MGW and the peer IP address or network segment comprises: collecting, by the MGW, statistics for a packet loss ratio between the MGW and the peer IP address, or for the packet loss ratio, a time delay and a jitter between the MGW and the peer IP address, and detecting whether the congestion or failure occurs in the IP bearer according to the packet loss ratio and its preset threshold, or according to the packet loss ratio plus its preset threshold, the time delay plus its preset threshold, and the jitter value plus its preset threshold; or
the detecting, by the MGW, the IP bearer between the MGW and the peer IP address or network segment comprises: collecting, by the MGW, statistics for a call loss rate due to peer IP address unreachable, and detecting whether the congestion or failure occurs in the IP bearer according to the call loss rate and a preset call loss rate threshold.

5. The method for implementing route control according to claim 1, wherein the detecting the IP bearer of the link connecting the MGW with the peer end comprises: sending, by an MGC, a call indication of detecting the IP bearer to the MGW; and collecting, by the MGW, statistics for a packet loss ratio of the IP bearer, or for the packet loss ratio, a jitter and a time delay of the IP bearer, and detecting whether a congestion or failure occurs in the IP bearer according to the packet loss ratio and its preset threshold, or according to the packet loss ratio plus its preset threshold, the time delay plus its preset threshold, and the jitter value plus its preset threshold; and
the performing the call route control according to the result of the detection comprises: sending a message carrying a Quality of Service, QoS, level to the MGC when detecting that the congestion or failure occurs in the IP bearer; and controlling, by the MGC, a portion or all of calls to the peer end and performing rerouting or IP domain handover according to the QoS level in the message.

6. The method for implementing route control according to claim 5, further comprising:
sending, by the MGW, a message carrying QoS recovery information when the MGW detects that the IP bearer is recovered to a normal state from the congestion or failure according to an indication of the MGC; and
receiving, by the MGC, the message carrying the QoS recovery information, and restoring original route control.

7. The method for implementing route control according to claim 1, wherein the detecting the IP bearer of the link connecting the MGW with the peer end comprises: collecting, by a local MGC, statistics for a call completion rate of the IP bearer between the MGW and the peer end, and detecting whether a congestion or failure occurs in the IP bearer according to the call completion rate and a preset call completion rate threshold; or
the detecting the IP bearer of the link connecting the MGW with the peer end comprises: collecting, by the MGC, statistics for a call completion rate of the IP bearer between the MGW and the peer end, obtaining a call loss rate according to a statistical result of the call completion rate, and detecting whether a congestion or failure occurs in the IP bearer according to the call loss rate and a preset call loss rate threshold; and
the performing the call route control according to the result of the detection comprises: performing, by the MGC, inter-route traffic distribution, inter-route traffic handover, or switching IP domain when detecting that the congestion or failure occurs in the IP bearer.

8. The method for implementing route control according to claim 1, wherein the detecting the IP bearer of the link connecting the MGW with the peer end comprises: directly determining, by a local MGW, whether a congestion or failure occurs in the IP bearer according to a status of a local IP port;
the performing the call route control according to the result of the detection comprises:
receiving, by the MGW, a call originated from an MGC requiring the MGW to allocate IP resources on the IP port when detecting that a congestion or failure occurs in the IP bearer, and returning a response message indicating that the bearer is interrupted to the MGC; and
performing, by the MGC, rerouting or IP domain handover according to the response message.

9. The method for implementing route control according to claim 8, further comprising: receiving, by the MGW, a call originated from the MGC requiring the MGW to allocate the IP resources on the IP port when the IP port is recovered from the congestion or failure, returning a response message indicating a success, and connecting the call.

10. The method for implementing route control according to claim 1, wherein the detecting the IP bearer of the link connecting the MGW with the peer end comprises: detecting whether a congestion or failure occurs in the IP bearer according to a result of a user-plane negotiation process; and
the performing the call route control according to the result of the detection comprises: reporting, by a local MGW, a message indicating that the negotiation process fails to a local MGC when determining that the negotiation process exceeds a predetermined period of time; and receiving, by the MGC, the message indicating that the negotiation process fails, ending a current bearer establishment process, and performing rerouting or IP domain handover.

11. The method for implementing route control according to claim 10, wherein before performing the rerouting, the method further comprises reacquiring a roaming number.

12. A system for implementing route control, comprising:
a detection module, adapted to detect an IP bearer of a link connecting an MGW with a peer end; and
a route control processing module, adapted to perform call route control according to a detection result obtained by the detection module.

13. The system for implementing route control according to claim 12, wherein the detection module comprises:
a statistics module, adapted to collect statistics for a packet loss ratio with a peer IP address, or for the packet loss ratio, a jitter and a time delay with the peer IP address, or for a call loss rate; and
a result determination module, adapted to determine whether a congestion or failure occurs in the IP bearer according to the packet loss ratio and its preset threshold, or according to the packet loss ratio plus its preset threshold, the time delay plus its preset threshold, and the jitter value plus its preset threshold; and
the route control processing module comprises:
a detection information reporting module, adapted to send a message carrying a cause ID indicating that the IP link fails to a route control module for subsequent calls originated to the IP address in a proportion according to a congestion or failure level when the result of the detection is that the congestion or failure occurs; and
the route control module, adapted to perform rerouting or IP domain handover on the calls corresponding to the message carrying the cause ID indicating that the IP link fails according to the message.

14. The system for implementing route control according to claim 13, wherein the statistics module, the result determination module, and the detection information reporting module are disposed in the MGW, and the route control module is disposed in an MGC.

15. The system for implementing route control according to claim 12, wherein the detection module comprises:
a detection indication module, adapted to send a call indication of detecting the IP bearer to a detection execution module; and
the detection execution module, adapted to collect statistics for a packet loss ratio of the IP bearer, or for the packet loss ratio, a jitter and a time delay of the IP bearer, and detect whether a congestion or failure occurs in the IP bearer according to the packet loss ratio and its preset threshold, or according to the packet loss ratio plus its preset threshold, the time delay plus its preset threshold, and the jitter value plus its preset threshold; and
the route control processing module comprises:
a detection information reporting module, adapted to send a message carrying a QoS level to a route control module when the result of the detection is that the congestion or failure occurs; and
the route control module, adapted to control a portion or all of calls to the peer end and perform rerouting or IP domain handover according to the QoS level in the message.

16. The system for implementing route control according to claim 15, wherein the detection indication module and the route control module are disposed in an MGC, and the detection execution module and the detection information reporting module are disposed in the MGW.

17. The system for implementing route control according to claim 12, wherein the detection module comprises:
a statistics module, adapted to collect statistics for a call completion rate or a call loss rate of the IP bearer with the peer end; and
a result determination module, adapted to determine whether a congestion or failure occurs in the IP bearer according to the call completion rate or the call loss rate obtained by the statistics module as well as a preset call completion rate threshold or a preset call loss rate threshold; and
the route control processing module comprises:
a route control module, adapted to send an alarm message when the result of the detection is that the congestion or failure occurs, and perform inter-route traffic distribution, inter-route traffic handover, or IP domain handover.

18. The system for implementing route control according to claim 17, wherein the statistics module, the result determination module, and the route control module are disposed in an MGC.

19. The system for implementing route control according to claim 12, wherein the detection module comprises: a status detection module, adapted to determine whether a congestion or failure occurs in the IP bearer according to a status of an IP port;
the route control processing module comprises:
a detection information reporting module, adapted to report a response message indicating that the bearer is interrupted to a route control module after receiving a call originated from an MGC requiring the MGW to allocate IP resources on the IP port when the result of the detection is that the congestion or failure occurs; and
the route control module, adapted to perform rerouting or IP domain handover according to the response message indicating that the bearer is interrupted.

20. The system for implementing route control according to claim 19, wherein the status detection module and the detection information reporting module are disposed in the MGW, and the route control module is disposed in the MGC.

21. The system for implementing route control according to claim 12, wherein the detection module comprises: a status detection module, adapted to determine whether a congestion or failure occurs in the IP bearer according to a result of a user-plane negotiation process; and
the route control processing module comprises:
a detection information reporting module, adapted to report a message indicating that the negotiation process fails to a route control module when determining that the negotiation process exceeds a predetermined period of time; and
the route control module, adapted to end a current bearer establishment process according to the message indicating that the negotiation process fails, and perform rerouting or IP domain handover.

22. The system for implementing route control according to claim 21, wherein the detection module and the detection information reporting module are disposed in the MGW, and the route control module is disposed in an MGC.

23. An MGW, comprising:
a detection module, adapted to detect an IP bearer of a link connecting the MGW with a peer end; and
a detection information reporting module, adapted to report detection information to an MGC according to a detection result of the detection module.

24. The MGW according to claim 23, wherein the detection module comprises:
a statistics module, adapted to collect statistics for a packet loss ratio between the MGW and a peer IP address, or for the packet loss ratio, a jitter and a time delay between the MGW and the peer IP address, or for a call loss rate; and
a result determination module, adapted to determine whether a congestion or failure occurs in the IP bearer according to the packet loss ratio and its preset threshold, or according to the packet loss ratio plus its preset threshold, the time delay plus its preset threshold, and the jitter value plus its preset threshold; and
the detection information reporting module comprises:
an information generating module, adapted to generate a message carrying a cause ID indicating that the IP link fails for subsequent calls originated to the IP address in a proportion according to a congestion or failure level when the result of the detection is that the congestion or failure occurs; and
an information reporting module, adapted to report the message carrying the cause ID indicating that the IP link fails.

25. The MGW according to claim 23, wherein the detection module comprises:
a detection execution module, adapted to collect statistics for a packet loss ratio of an IP bearer of a call indicated by an MGC, or for the packet loss ratio, a jitter and a time delay of the IP bearer of the call indicated by the MGC, and detect whether a congestion or failure occurs in the IP bearer according to the packet loss ratio and its preset threshold, or according to the packet loss ratio plus its preset threshold, the time delay plus its preset threshold, and the jitter value plus its preset threshold; and
the detection information reporting module comprises:
an information generating module, adapted to generate a message carrying a QoS level when the result of the detection is that the congestion or failure occurs; and
an information reporting module, adapted to report the message carrying the QoS level.

26. The MGW according to claim 23, wherein the detection module comprises:
a status detection module, adapted to determine whether a congestion or failure occurs in the IP bearer according to a status of an IP port; and
the detection information reporting module comprises:
an information generating module, adapted to generate a response message indicating that the bearer is interrupted after receiving a call originated from an MGC requiring the MGW to allocate IP resources on the IP port when the result of the detection is that the congestion or failure occurs; and
an information reporting module, adapted to report the response message indicating that the bearer is interrupted.

27. The MGW according to claim 23, wherein:
the detection module comprises:
a status detection module, adapted to determine whether a congestion or failure occurs in the IP bearer according to a result of a user-plane negotiation process; and
the detection information reporting module comprises:
an information generating module, adapted to generate a message indicating that the negotiation process fails when determining that the negotiation process exceeds a predetermined period of time; and
an information reporting module, adapted to report the message indicating that the negotiation process fails.

28. An MGC, comprising:
a route control execution module, adapted to acquire a detection result of an IP bearer, and perform call route control according to the result of the detection of the IP bearer.

29. The MGC according to claim 28, wherein the route control execution module comprises:
an information receiving module, adapted to receive a message carrying a cause ID indicating that the IP link fails; and
a route control module, adapted to perform rerouting or IP domain handover on calls corresponding to the message carrying the cause ID indicating that the IP link fails received by the information receiving module according to the message.

30. The MGC according to claim 28, wherein the route control execution module comprises:
an information receiving module, adapted to receive a message carrying a QoS level; and
a route control module, adapted to control a portion or all of calls to the peer end and perform rerouting or IP domain handover according to the QoS level in the message received by the information receiving module.

31. The MGC according to claim 28, further comprising:
a statistics module, adapted to collect statistics for a call completion rate or a call loss rate of the IP bearer with the peer end; and
a result determination module, adapted to determine whether a congestion or failure occurs in the IP bearer according to the call completion rate or the call loss rate obtained by the statistics module as well as a preset call completion rate threshold or a preset call loss rate threshold; wherein
the route control execution module comprises: a route control module, adapted to send an alarm message when a detection result determined by the result determination module is that the congestion or failure occurs, and perform inter-route traffic distribution, inter-route traffic handover, or IP domain handover.

32. The MGC according to claim 28, wherein the route control execution module comprises:
an information receiving module, adapted to receive a response message indicating that the bearer is interrupted; and
a route control module, adapted to perform rerouting or IP domain handover according to the response message indicating that the bearer is interrupted received by the information receiving module.

33. The MGC according to claim 28, wherein the route control execution module comprises:
an information receiving module, adapted to receive a message indicating that the negotiation process fails; and
a route control module, adapted to end a current bearer establishment process according to the received message indicating that the negotiation process fails, and perform rerouting or IP domain handover.
